# EUROPÄISCHE PATENTSCHRIFT

(11) **EP 1 940 667 B1**
(45) Veröffentlichungstag und Bekanntmachung des Hinweises auf die Patenterteilung: **25.03.2009**
(21) Anmeldenummer: 06828481.9
(22) Anmeldetag: 25.09.2006
(51) Int. Cl.: B61C 9/44, B61C 9/50

(54) **KARDANISCHE DOPPELGELENKKUPPLUNG FÜR SCHIENENFAHRZEUGE**
UNIVERSAL DOUBLE-JOINTED COUPLING FOR RAILWAY VEHICLES
TRANSMISSION A JOINT A DOUBLE CARDAN DE VEHICULES SUR RAILS

(30) Priorität: 30.09.2005 DE 202005015769 U
(43) Veröffentlichungstag der Anmeldung: 09.07.2008
(73) Patentinhaber: KWD Kupplungswerk Dresden GmbH, 01159 Dresden (DE)
(72) Erfinder: SPENSBERGER, Christoph, 01744 Dippoldiswalde OT Paulsdorf (DE)
(74) Vertreter: Hempel, Hartmut
(86) Internationale Anmeldenummer: PCT/DE2006/001717
(87) Internationale Veröffentlichungsnummer: WO 2007/036219

(56) Entgegenhaltungen:
- EP-A1- 0 878 368
- CH-A- 246 409
- DE-A1- 10 050 757
- DE-U1- 29 522 268
- GB-A- 1 013 142

## Beschreibung

Die Erfindung betrifft eine kardanische Doppelgelenkkupplung für Schienenfahrzeuge mit zwei Gelenkebenen, die zwei Kupplungsgelenke, die zur Drehmomentübertragung durch eine Ritzelhohlwelle über eine von der Ritzelhohlwelle umschlossene Welle miteinander verbunden sind, enthält, wobei die eine Gelenkebene einem Kupplungsgelenk mit Balligverzahnung mit winkligem und axialem Ausgleichsvermögen und die andere Gelenkebene einem drehsteifen, biegeelastischen Kupplungsgelenk zugeordnet ist.

Herkömmliche Zahnkupplungen mit Balligverzahnung zum Übertragen von Drehmomente werden zum Verbinden einer treibenden und einer getriebenen Welle eingesetzt, um die zwischen den beiden Wellen auftretenden achsparallelen, axialen oder winkligen Verlagerungen auszugleichen.

Eine zutreffende Antriebseinheit ist in der Druckschrift EP 0878 368 A1 beschrieben, in der jeweils eine Zahnkupplung mit Balligverzahnung aus zwei gleichen Gelenken besteht, wobei das Problem besteht, dass die jeweils zugehörige Balligverzahnung eine separate Schmierung und eine Abdichtung erfordert. Der Aufwand für die Erreichung einer sehr guten Abdichtung ist hoch. Nachteilig ist auch ihr hoher Platzbedarf.
Der Vorteil der Zahnkupplungen mit Balligverzahnung dagegen besteht in ihrem außerordentlich guten axialen und winkligen Ausgleichsvermögen.

Eine andere verbesserte Kupplung für eine Antriebseinheit für Schienenfahrzeuge ist in der Druckschrift DE 100 50 757 A1 beschrieben, wobei die Antriebseinheit mit einem am Fahrzeugrahmen oder am Fahrwerk aufgehängten Elektromotor, einem Getriebe und einem kardanisch wirkenden Kupplungssystem versehen ist. Das Kupplungssystem ist zwischen einer Radsatzwelle und dem Getriebe angeordnet, wobei ein erster Teil des Kupplungssystems in Form einer Balligzahnkupplung in das Abtriebszahnrad des Getriebes und in dessen Schmierölkreislauf integriert ist und wobei zwischen dem Getriebe und dem Radsatz ein abtriebsseitiger zweiter Teil des Kupplungssystems vorgesehen ist.
Der zweite Teil des Kupplungssystems stellt dabei eine gummielastische Kupplung dar.

Ein Problem besteht darin, dass der gummielastische Kupplungsteil gegen Verschleiß anfällig und damit nicht wartungsfrei ist.

Herkömmliche drehsteife, biegeelastische Kupplungen, wie z.B. Ganzmetallkupplungen sind Kupplungen, die durch Federeigenschaften die Verlagerung ausgleichen. Sie haben dadurch den Vorteil, dass sie sowohl dauerfest als auch wartungsfrei sind. Sie weisen aber erhebliche Grenzen im Bereich der elastischen Verformung und damit der Verlagerungen aus, wobei das axiale Verlagerungsvermögen weitgehend eingeschränkt ist.

Eine Doppelgelenkkupplung in Form eines Querantriebes mit einem Motor ist in der Druckschrift DE 295 22 268 U1 beschrieben, wobei die Läuferwelle des Motors parallel zur Treibachse eines Schienenfahrzeuges liegt und mit einem Achsgetriebe verbunden ist, welches eine Ritzelhohlwelle umfasst, die eine Zahnwelle umschließt, wobei die Zahnwelle zumindest teilweise innerhalb der Ritzelhohlwelle verläuft, wobei die Läuferwelle mit ihrem abtriebsseitigen Ende über eine Motorabtriebskupplung mit der Zahnwelle gekoppelt und die Motorabtriebskuppplung als winkel- und axialnachgiebige Kupplung ausgebildet ist. Die Zahnwelle ist über eine Getriebeantriebskupplung mit der Ritzelhohlwelle gekoppelt an ihren Enden durch Spiralfeder axial fixiert, wobei die Spiralfedern die Zahnwelle nach einer Auslenkung wieder in ihre Mittenstellung zur Ritzelhohlwelle zurückführen.

Ein Problem besteht darin, dass durch die unmittelbare direkte Bindung der Zahnwelle an die Ritzelhohlwelle über die Balligverzahnung keine freie Austauschbarkeit der Kupplungselemente des Kupplungsgelenks mit Balligverzahnung im des Kupplungsgelenks mit Balligverzahnung im Fälle eines Defektes möglich ist.

Der Erfindung liegt die Aufgabe zugrunde, eine kardanische Doppelgelenkkupplung für Schienenfahrzeuge anzugeben, die derart geeignet ausgebildet ist, dass eine problemlose einfache und freie Tauschbarkeit von Kupplungselementen im Bereich des Kupplungsgelenkes mit Balligverzahnug gewährleistet werden kann.

Die Aufgabe wird durch die Merkmale des Anspruchs 1 gelöst. Die kardanische Doppelgelenkkupplung für Schienenfahrzeuge mit zwei Gelenkebenen enthält zwei Kupplungsgelenke, die zur Drehmomentübertragung durch eine Ritzelhohlwelle über eine von der Ritzelhohlwelle umschlossene Welle miteinander verbunden sind, wobei die eine Gelenkebene einem Kupplungsgelenk mit Balligverzahnung mit winkligem und axialem Ausgleichsvermögen und die andere Gelenkebene einem drehsteifen, biegeelastischen Kupplungsgelenk zugeordnet sind,
wobei gemäß dem Kennzeichenteil des Anspruchs 1
das Kupplungsgelenk mit Balligverzahnung eine tauschbare Hülse mit Innenverzahnung und eine tauschbare Kupplungsnabe mit dazu gehöriger Außenverzahnung aufweist, wobei die als Zwischenwelle ausgebildete Welle eridbereichsseitig mit der tauschbaren Kupplungsnabe verbunden ist und wobei die Ritzelhohlwelle außerhalb der tauschbaren Hülse an der Außenwandung der Hülse befestigt ist.

Das Kupplungsgelenk mit Balligverzahnung ist ein Zahnkupplungsgelenk mit Balligverzahnung.

Das drehsteife, biegeelastische Kupplungsgelenk kann als Membran-, Ringscheiben- oder Läschenkupplungsgelenk ausgebildet sein.

Das drehsteife, biegeelastische Kupplungsgelenk in Form eines Ringscheibenkupplungsgelenks weist als Hauptbestandteil eine elastische Ringsscheibe auf, die auf der einen dem Zahnkupplungsgelenk mit Balligverzahnung zugewandten Seite über einen Zwischenwellenflansch mit einer Zwischenwelle mittels eines ersten Arretierungselements in fester Verbindung steht, wobei auf der anderen Seite der elastischen Ringscheibe eine Motornabe diametral zum Zwischenwellenflansch mit einem eigenen Motornabenflansch mittels eines zweiten Arretieruhgselements befestigt ist.

An dem Kupplungsgelenk mit Balligverzahnung ist die Ritzelhohlwelle stirnseitig an einem Endbereich befestigt, wobei der andere Endbereich der Ritzelhohlwelle stirnseitig offen ist.

Die Zwischenwelle ist von der zum drehsteifen, biegeelastischen Kupplungsgelenk gerichteten stirnbereichsendoffenen Ritzelhohlwelle umgeben.

Das Kupplungsgelenk mit Balligverzahnung ist von der tauschbaren Hülse geschlossen umgeben.

Die Hülse ist mit einem Deckel versehen, der eine Schmierung in einem Freiraum zwischen Deckel und Zahnkupplungsnabe mit totaler Abdichtung ermöglicht.

Die Ritzelhohlwelle kann in Richtung zum drehsteifen, biegeelastischen Kupplungsgelenk je nach Bedarf einen divergierenden oder einen zylindrischen Innendurchmesser aufweisen.

Die Anordnung der beiden Kupplungsgelenke in ihren Gelenkebenen kann im Bereich von Radsätzen sowohl außerhalb als auch innerhalb der Radsätze ausgebildet sein.

Es liegt eine Kombination von zwei Gelenken von unterschiedlichen Kupplungstypen mit unterschiedlichen Eigenschaften vor.

Zumindest die beiden Eigenschaften - Dauerfestigkeit und Wartungsfreiheit sowie geringer Platzbedarf - des drehsteifen, biegeelastischen Kupplungsgelenks machen es möglich, die drehsteifen, biegeelastischen Kupplungen an den Stellen im Antrieb einzubauen, an denen eine aggressive Umgebung vorhanden ist und die Wartungsfreiheit erforderlich ist.

Die Eigenschaften - hohes axiales Verlagerungsvermögen, aber Beachtung von Schmierung und Abdichtung - des Zahnkupplungsgelenks mit Balligverzahnung eröffnen die Möglichkeit, zweckmäßig das Zahnkupplungsgelenk an den Stellen im Antrieb einzubauen, an denen die Handhabung der Schmierung sowie die Beherrschung der Abdichtung in einfacher Weise gegeben ist.

Mit der erfindungsgemäßen kardanischen Doppelgelenkkupplung können die obigen Eigenschaften - einerseits Dauerfestigkeit und Wartungsfreiheit sowie geringer Platzbedarf plus andererseits hohes axiales Verlagerungsvermögen und Schmierung an beherrschbaren Stellen im Radsatzbereich -, der beiden unterschiedlichen Gelenke herausgearbeitet und gezielt genützt werden.

Die Erfindung wird anhand eines Ausführungsbeispiels mittels mehrerer Zeichnungen näher erläutert.

Es zeigen:
- Fig. 1: einen schematischen Längsschnitt durch eine erfindungsgemäße kardanische Doppelgelenkkupplung - Zahnkupplungsgelenk/Ringscheibenpplungsgelenk - im ruhenden Zustand und
- Fig. 2: einen schematischen Längsschnitt durch die Doppelgelenkkupplung im ausgelenkten Zustand nach Fig. 1.

In den folgenden Figuren werden für gleiche Teile mit gleichen Funktionen die gleichen Bezugszeichen verwendet.

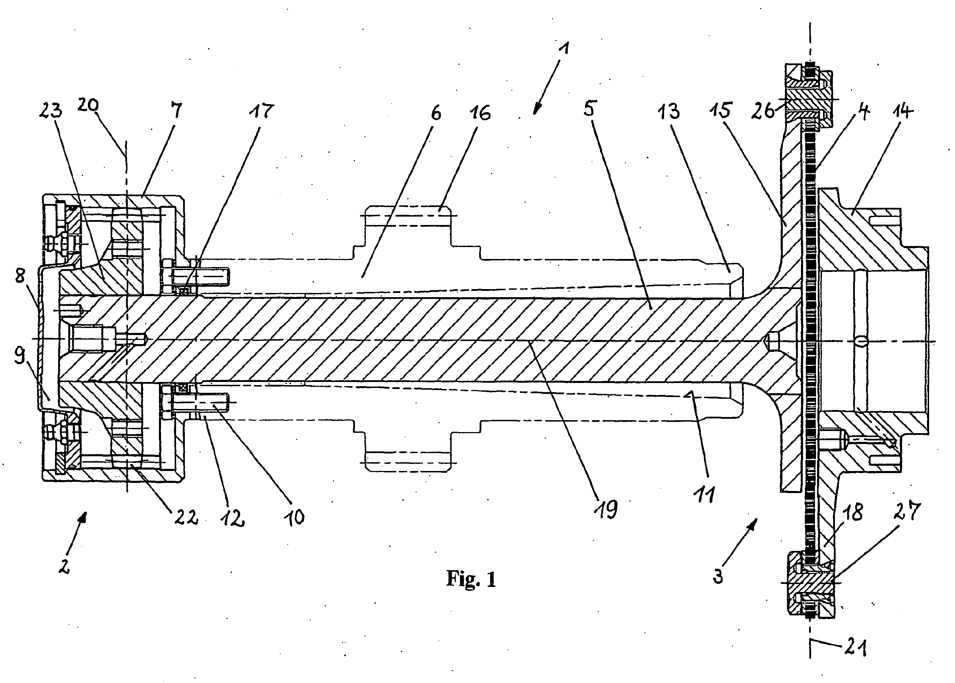

In Fig. 1 ist eine kardanische Doppelgelenkkupplung 1 für Schienenfahrzeuge mit zwei Gelenkebenen 20,21 dargestellt, die zwei Kupplungsgelenke, die zur Drehmomentübertragung durch eine Ritzelhohlwelle 6 über eine von der Ritzelhohlwelle umschlossene Welle 5 miteinander verbunden sind, enthält, wobei die eine Gelenkebene 20 einem Kupplungsgelenk 2 mit Balligverzahnung 22 mit winkligem und axialem Ausgleichsvermögen und die andere Gelenkebene 21 einem drehsteifen, biegeelastischen Kupplungsgelenk 3 zugeordnet ist.

Erfindungsgemäß weist das Kupplungsgelenk 2 mit Balligverzahnung 22 eine tauschbare Hülse 7 mit Innenverzahnung und eine tauschbare Kupplungsnabe 23 mit dazu gehöriger Außenverzahnung auf, wobei die als Zwischenwelle ausgebildete Welle 5 endbereichsseitig mit der tauschbaren Kupplungsnabe 23 verbunden ist und wobei die Ritzelhohlwelle 6 außerhalb der tauschbaren Hülse 7 an der Außenwandung der Hülse 7 befestigt ist.

In Fig. 1 sind als drehsteifes, biegeelastisches Kupplungsgelenk 3 ein Ringscheibenkupplungsgelenk und als Kupplungsgelenk 2 mit einer Balligverzahnung eine Zahnkupplung mit Balligverzahnung 22 eingesetzt.

Das Ringscheibenkupplungsgelenk 3 weist als Hauptbestandteil eine elastische Ringscheibe 4 auf, die auf der einen dem Zahnkupplungsgelenk 2 zugewandten Seite über einen Flansch 15 mit einer Zwischenwelle 5 mittels eines ersten Arretierungselements 26 in fester Verbindung steht. Auf der anderen Seite der Ringscheibe 4 ist eine Motornabe 14 diametral zum Flansch 15 mit einem eigenen Motornabenflansch 18 mittels eines zweiten Arretierungselements 27 befestigt.

Das Zahnkupplungsgelenk 2 mit der Balligverzahnung 22 ist an einer Ritzelhohlwelle 6 stirnseitig an einem Endbereich 12 befestigt, wobei der andere Endbereich 13 stirnseitig offen und zum Ringscheibenkupplungsgelenk 3 gerichtet ist.

Die Ritzelhohlwelle 6 besitzt etwa mittig ein Ritzel 16 bzw. ein Zahnrad für einen Anschluss an ein Getriebe (nicht eingezeichnet).

Dabei ist die Zwischenwelle 5 von der zum drehsteifen, biegeelastischen Kupplungsgelenk 3 stirnbereichsendoffenen Ritzelhohlwelle 6 umgeben.

Das Zahnkupplungsgelenk 2 mit Balligverzahnung 22 ist von einer Hülse 7 umgeben, die mit einem Deckel 8 versehen ist, der eine Schmierung mit totaler Abdichtung nach außen ermöglicht, wobei sich das Schmieröl bzw. -fett hauptsächlich in einem Freiraum 9 zwischen der Zahnkupplungsnabe 23 und dem Deckel 8 bzw. der Hülse 7 befindet. Je nach Bedarf kann die Hülse 7 eine geschlossene Hülse sein.

Die Hülse 7 des Zahnkupplungsgelenks 2 mit Balligverzahnung ist mittels einer Verschraubung 10 an der Ritzelhohlwelle 6 befestigt.

Im Endbereich 12 zwischen der Ritzelhohlwelle 6 und der Hülse 7 befindet sich eine innere Dichtung 17.

Die Ritzelhohlwelle 6 weist in Richtung zum drehsteifen, biegeelastischen Kupplungsgelenk 3 einen divergierenden Innendurchmesser 11 auf.

Die Anordnung der beiden Kupplungsgelenke 2,3 kann in ihren Gelenkebenen 20,21 im Bereich von Antrieben bzw. von Radsätzen beliebig ausgebildet sein.

Das drehsteife, biegeelastische Kupplungsgelenk 3 kann des Weiteren auch als Membran- oder Laschenkupplungsgelenk ausgebildet sein.

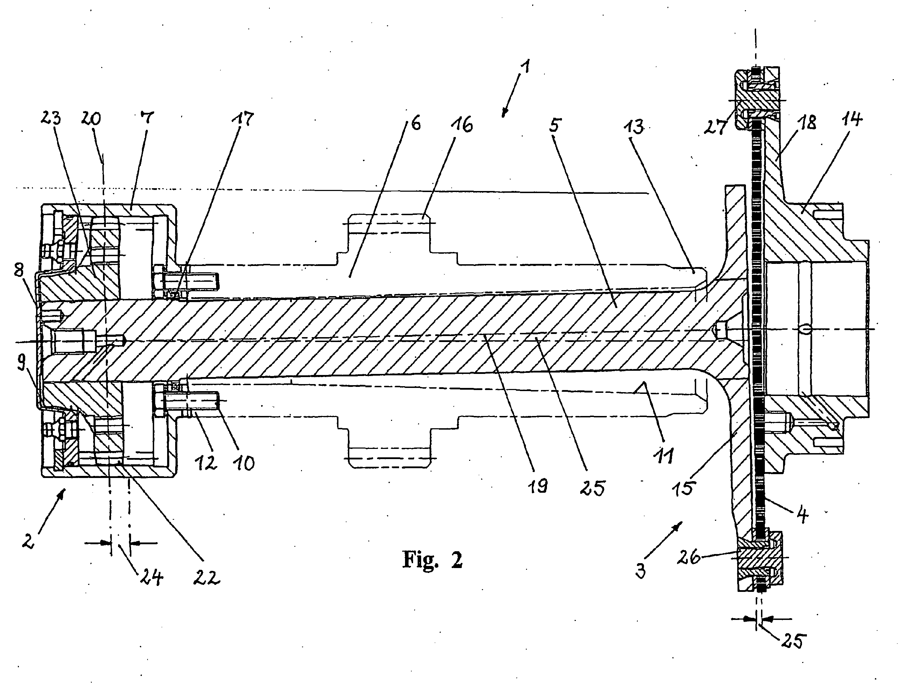

Im Folgenden wird die Funktionsweise der erfindungsgemäßen Doppelgelenkkupplung 1 anhand der Fig. 2 näher erläutert:
In Fig. 2 ist die kardanische Doppelgelenkkupplung 1 in einer axialen Verlagerung 24 und einer winkligen Verlagerung 25 dargestellt. Bei der axialen Verlagerung 24 des Zahnkupplungsgelenks 2 wird das Zahnkupplungsgelenk 2 gemeinsam mit der Ritzelhohlwelle 6 in Richtung zum Ringscheibenkupplungsgelenk 3 verschoben, wobei die Zahnkupplungsnabe 23 den Freiraum 9 im Bereich des Deckels 8 bzw. der Hülse 7 nutzt.
Bei der gleichzeitig auftretenden, winkligen Verlagerung 25 kippt die Zwischenwelle 5 aus der Kupplungsachse 19, wodurch die elastische Ringscheibe 4 die winklige Verlagerung 25 abfedert.
Zur Verdeutlichung sind die dynamischen Abweichungen der Gelenkebenen 20,21 in Fig. 2 bezüglich des Ruhezustands in Fig. 1 angegeben.

Mit der erfindungsgemäßen kardanischen Doppelgelenkkupplung 1 können die Vorteile - Dauerfestigkeit und Wartungsfreiheit sowie geringer Platzbedarf plus hohes winkliges und axiales Verlagerungsvermögen und Schmierung an beherrschbaren Stellen im Radsatzbereich -, der beiden unterschiedlichen Kupplungsgelenke 2,3 herausgearbeitet und gezielt genutzt werden.

Z.B. kann bei einem außen befindlichen Einzelradantrieb für eine Straßenbahn das drehsteife, biegeelastische Kupplungsgelenk 3 an den Stellen zwischen Rad und Getriebe, an denen wenig Platz vorhanden ist, und unmittelbar über der Straße, an denen eine aggressive Umgebung vorhanden ist, angeordnet sein. Mit der gegebenen Wartungsfreiheit ist diese Anordnung des drehsteifen, biegeelastischen Kupplungsgelenks 3 in dieser Umgebung sehr zweckmäßig.

Dagegen kann das Zahnkupplungsgelenk 2 mit Balligverzahnung 22 im geschützten Bereich des Getriebes platziert sein, in dem genügend Platz zur Anpassung und Verschiebung vorhanden ist. Das Zahnkupplungsgelenk 2 mit Balligverzahnung 22 kann dort durch den Deckel 8 bzw. die Hülse 7 abgedichtet sein, der/die nicht bewegt wird und somit eine Abdichtung nach außen gewährleistet.

Die Erfindung eröffnet die Möglichkeit, dass eine problemlose einfache und freie Tauschbarkeit von Kupplungselementen im Bereich des Kupplungsgelenkes mit Balligverzahnug gewährleistet werden kann.

In Fig. 1 kann das Zahnkupplungsgelenk 2 mit der Balligverzahnung 22 über die Ritzelhohlwelle 6 mit dem Getriebe fest verbunden sein, wobei die Verbindung der Hülse 7 mit der Ritzelhohlwelle 6 und dem hülsenangepassten Deckel 8 die Möglichkeit eröffnet, dass nach außen hin gerichtet keine bewegten Dichtungselemente vorhanden sind, die die Abdichtung negativ beeinflussen könnten. Das Zahnkupplungsgelenk 2 mit Balligverzahnung ist nach außen total verschlossen.

Somit wird auch der sonst übliche hohe Wartungsaufwand zur Abdichtung des Zahnkupplungsgelenks 2 mit Balligverzahnung 22 wesentlich verringert.

Mit der erfindungsgemäßen kardanischen Doppelgelenkkupplung 1 wird die Möglichkeit eröffnet, Antriebe für die Schienenfahrzeuge den umweltlichen und technischen Gegebenheiten umfassender und flexibler anzupassen.

### Bezugszeichenliste

- 1: Doppelgelenkkupplung
- 2: Kupplungsgelenk mit Balligverzahnung
- 3: Drehsteifes, biegeelastisches Kupplungsgelenk
- 4: Ringscheibe
- 5: Zwischenwelle
- 6: Ritzelhohlwelle
- 7: Hülse
- 8: Deckel
- 9: Freiraum
- 10: Verschraubung
- 11: Innendurchmesser
- 12: Erster Endbereich
- 13: Zweiter Endbereich
- 14: Motornabe
- 15: Flansch
- 16: Ritzel
- 17: Innere Dichtung
- 18: Motornabenflansch
- 19: Kupplungsachse
- 20: Erste Gelenkebene
- 21: Zweite Gelenkebene
- 22: Balligverzahnung
- 23: Zahnkupplungsnabe
- 24: Axiale Verlagerung
- 25: Winklige Verlagerung
- 26: Erstes Arretierungselement
- 27: Zweites Arretierungselement

## Patentansprüche

1. Kardanische Doppelgelenkkupplung (1) für Schienenfahrzeuge mit zwei Gelenkebenen (20,21), die zwei Kupplungsgelenke, die zur Drehmomentübertragung durch eine Ritzelhohlwelle (6) über eine von der Ritzelhohlwelle umschlossene Welle (5) miteinander verbunden sind, enthält,
wobei
die eine Gelenkebene (20) einem Kupplungsgelenk (2) mit Balligverzahnung (22) mit winkligem und axialem Ausgleichsvermögen und
die andere Gelenkebene (21) einem drehsteifen, biegeelastischen Kupplungsgelenk (3) zugeordnet sind,
**dadurch gekennzeichnet,**
**dass** das Kupplungsgelenk (2) mit Balligverzahnung (22) eine tauschbare Hülse (7) mit Innenverzahnung und eine tauschbare Kupplungsnabe (23) mit dazu gehöriger Außenverzahnung aufweist, wobei die als Zwischenwelle ausgebildete Welle (5) endbereichsseitig mit der tauschbaren Kupplungsnabe (23) verbunde ist und wobei die Ritzelhohlwelle (6) außerhalb der tauchbaren Hülse (7) an der Außenwandung der Hülse (7) befestigt ist.

2. Doppelgelenkkupplung nach Anspruch 1,
**dadurch gekennzeichnet,**
**dass** das Kupplungsgelenk (2) mit Balligverzahnung (22) ein Zahnkupplungsgelenk mit Balligverzahung ist.

3. Doppelgelenkkupplung nach Anspruch 1,
**dadurch gekennzeichnet,**
**dass** das drehsteife, biegeelastische Kupplungsgelenk (3) als Membran-, Ringscheiben- oder Laschenkupplungsgelenk ausgebildet ist.

4. Doppelgelenkkupplung nach Anspruch 3,
**dadurch gekennzeichnet,**
**dass** das drehsteife, biegeelastische Kupplungsgelenk (3) in Form eines Ringscheibenkupplungsgelenks als Hauptbestandteil eine elastische Ringsscheibe (4) aufweist, die auf der einen dem Zahnkupplungsgelenk (2) mit Balligverzahnung (22) zugewandten Seite über einen Zwischenwellenflansch (15) mit einer Zwischenwelle (5) mittels eines ersten Arretierungselements (26) in fester Verbindung steht, wobei auf der anderen Seite der elastischen Ringscheibe (4) eine Motornabe (14) diametral zum Zwischenwellenflansch (15) mit einem eigenen Motornabenflansch (18) mittels eines zweiten Arretierungselements (27) befestigt ist.

5. Doppelgelenkkupplung nach einem der vorhergehenden Ansprüche,
**dadurch gekennzeichnet,**
**dass** am Kupplungsgelenk (2) mit Balligverzahnung (22) die Ritzelhohlwelle (6) stirnseitig an einem Endbereich (12) befestigt ist, wobei der andere Endbereich (13) der Ritzelhohlwelle (6) stirnseitig offen ist.

6. Doppelgelenkkupplung nach Anspruch 5,
**dadurch gekennzeichnet,**
**dass** die Zwischenwelle (5) von der zum drehsteifen, biegeelastischen Kupplungsgelenk (3) gerichteten stirnbereichsendoffenen Ritzelhohlwelle (6) umgeben ist.

7. Doppelgelenkkupplung nach Ansprüchen 1 bis 6,
**dadurch gekennzeichnet,**
**dass** das Kupplungsgelenk (2) mit Balligverzahnung (22) von der tauschbaren Hülse (7) geschlossen umgeben ist.

8. Doppelgelenkkupplung nach Anspruch 7,
**dadurch gekennzeichnet,**
**dass** die Hülse (7) mit einem Deckel (8) versehen ist, der eine Schmierung in einem Freiraum (9) zwischen Deckel (8) und Zahnkupplungsnabe (23) mit totaler Abdichtung ermöglicht.

9. Doppelgelenkkupplung nach Anspruch 1 bis 8,
**dadurch gekennzeichnet,**
**dass** die Ritzelhohlwelle (6) in Richtung zum drehsteifen, biegeelastischen Kupplungsgelenk (3) je nach Bedarf einen divergierenden oder einen zylindrischen Innendurchmesser (11) aufweist.

10. Doppelgelenkkupplung nach Ansprüchen 1 bis 9,
**dadurch gekennzeichnet,**
**dass** die Anordnung der beiden Kupplungsgelenke (2,3) in ihren Gelenkebenen (20,21) im Bereich von Radsätzen sowohl außerhalb als auch innerhalb der Radsätze ausgebildet ist.

## Claims

1. Universal double-jointed coupling (1) for railway vehicles with two joint levels (20,21), which disposes of two coupling joints, which are connected with each other via a shaft, which is surrounded by the hollow pinion shaft (5) for torque transmission by a hollow pinion shaft (6), while one joint level (20) being assigned to a coupling joint (2) with crowned gear (22) with angular and axial compensation capability and the other joint level (21) being assigned to a torsion-proof, flexible coupling joint (3), **characterized by** the fact that the coupling joint (2) with crowned gear (22) shows a removable internally geared sleeve (7) and a removable coupling hub (23) with the corresponding external gearing, while the final area of the shaft (5), which is embodied as an intermediate shaft, is connected to the removable coupling hub (23) and the hollow pinion shaft (6), is fastened to the outer wall of the sleeve (7) outside the removable sleeve (7).

2. Double-jointed coupling according to claim 1, **characterized by** the fact that the coupling joint (2) with crowned gear (22) is a jaw coupling joint with crowned gear.

3. Double-jointed coupling according to claim 1, **characterized by** the fact that the torsion-proof, flexible coupling joint (3) is embodied as membrane coupling joint, washer coupling joint or strap type coupling joint.

4. Double-jointed coupling according to claim 3, **characterized by** the fact that the torsion-proof, flexible coupling joint (3) in the form of a washer coupling joint disposes of a flexible washer (4) as main component, which is firmly connected with a first fastening element (26) to an intermediate shaft (5) via an intermediate shaft flange (15) on the side which is oriented towards the jaw coupling joint (2) with crowned gear (22), while, on the other side of the elastic washer (4), a motor hub (14) is diametrically fastened with a second fastening element (27) to the intermediate shaft flange (15) with an own motor hub flange (18).

5. Double-jointed coupling according to one of the previously mentioned claims, **characterized by** the fact that, on the coupling joint (2) with crowned gear (22), the hollow pinion shaft (6) is fastened to the front end of one end area (12), while the other end area (13) of the hollow pinion shaft (6) is open at the front end.

6. Double-jointed coupling according to claim 5, **characterized by** the fact that the intermediate shaft (5) is surrounded by the hollow pinion shaft (6), which is open at the front end and oriented towards the torsion-proof, flexible coupling joint (3).

7. Double-jointed coupling according to claims 1 to 6, **characterized by** the fact that the coupling joint (2) with crowned gear (22) is completely surrounded by the removable sleeve (7).

8. Double-jointed coupling according to claim 7, **characterized by** the fact that the sleeve (7) disposes of a lid (8), which enables lubrication in a clearance (9) between the lid (8) and the jaw coupling hub (23) with complete sealing.

9. Double-jointed coupling according to claims 1 to 8, **characterized by** the fact that the hollow pinion shaft (6) shows, as the need arises, a diverging or a cylindrical inner diameter (11) in the direction of the torsion-proof, flexible coupling joint (3).

10. Double-jointed coupling according to claims 1 to 9, **characterized by** the fact that the arrangement of both coupling joints (2,3) in their joint levels (20,21) can be embodied outside as well as inside the wheel sets in the area of the wheel sets.

## Revendications

1. Transmission à joint à double cardan (1) pour véhicules sur rail avec deux niveaux de joint (20, 21) comprenant deux joints de transmission combinés l'un à l'autre par un arbre creux de pignon (6) par l'intermédiaire d'un arbre (5) enveloppé par l'arbre creux de pignon pour transmission de couple,
un niveau de joint (20) étant associé à un joint de transmission (2) avec une denture sphéroïde (22) à capacité de compensation angulaire et axiale et
l'autre niveau de joint (21) étant associé à un joint de transmission rigide à la torsion, à flexibilité élastique (3),
**caractérisée en ce que**
le joint de transmission (2) à denture sphéroïde (22) présente une douille remplaçable (7) à denture intérieure et un moyeu de transmission remplaçable (23) à denture extérieure y correspondant, l'arbre (5) formé en tant qu'arbre intermédiaire étant combiné au moyeu de transmission remplaçable (23) côté partie d'extrémité et l'arbre creux de pignon (6) étant fixé hors de la douille remplaçable (7) à la paroi extérieur de la douille (7).

2. Transmission à joint à double cardan selon la revendication 1
**caractérisée en ce que**
le joint de transmission (2) à denture sphéroïde (22) est un joint de transmission denté à denture sphéroïde.

3. Transmission à joint à double cardan selon la revendication 1
**caractérisée en ce que**
le joint de transmission rigide à la torsion, à flexibilité élastique (3) est formé comme un joint de transmission à membrane, à bague annulaire ou à languette.

4. Transmission à joint à double cardan selon la revendication 3
**caractérisée en ce que**
le joint de transmission rigide à la torsion, à flexibilité élastique (3) sous la forme d'un joint de transmission à bague annulaire en tant qu'élément principal présente une bague annulaire élastique (4) étant en liaison fixe grâce à un premier élément de blocage (26), sur le côté tourné vers le joint de transmission (2) denté à denture sphéroïde (22) par l'intermédiaire d'une bride d'arbre intermédiaire (15) avec un arbre intermédiaire (5), un moyeu de moteur (14) étant fixé diamétralement par rapport à la bride d'arbre intermédiaire (15) avec une propre bride de moyeu de moteur (18) à l'aide d'un deuxième élément de blocage (27) sur l'autre côté de la bague annulaire élastique (4).

5. Transmission à joint à double cardan selon l'une des revendications précédentes
**caractérisée en ce que**
l'arbre creux de pignon (6) est fixé côté frontal à une partie d'extrémité (12) au joint de transmission (2) à denture sphéroïde (22), l'autre partie d'extrémité (13) de l'arbre creux de pignon (6) étant ouverte côté frontal.

6. Transmission à joint à double cardan selon la revendication 5
**caractérisée en ce que**
l'arbre intermédiaire (5) est enveloppé par l'arbre creux de pignon (6) ouvert à l'extrémité de la partie frontale dirigé vers le joint de transmission rigide à la torsion, à flexibilité élastique (3).

7. Transmission à joint à double cardan selon les revendications 1 à 6
**caractérisée en ce que**
le joint de transmission (2) à denture sphéroïde (22) est enveloppé de façon fermée par la douille remplaçable (7).

8. Transmission à joint à double cardan selon la revendication 7
**caractérisée en ce que**
la douille (7) est pourvue d'un couvercle (8) permettant une lubrification dans un espace libre (9) entre le couvercle (8) et le moyeu de transmission denté (23) avec étanchéité totale.

9. Transmission à joint à double cardan selon les revendications 1 à 8
**caractérisée en ce que**
l'arbre creux de pignon (6) présente en direction du joint de transmission rigide à la torsion, à flexibilité élastique (3) un diamètre intérieur (11) divergent ou cylindrique en fonction des besoins.

10. Transmission à joint à double cardan selon les revendications 1 à 9
**caractérisée en ce que**
la disposition des deux joints de transmission (2, 3) dans leurs niveaux de transmission (20, 21) est formée dans la partie des essieux montés tant à l'extérieur qu'à l'intérieur des essieux montés.
